# EUROPEAN PATENT APPLICATION

(11) **EP 3 670 963 A1**
(43) Date of publication of application: **24.06.2020**
(21) Application number: 18214888.2
(22) Date of filing: 20.12.2018
(51) Int. Cl.: F16H 3/00, B60K 6/547, B60K 6/48

(54) **A TRANSMISSION FOR A VEHICLE**

(71) Applicant: Ningbo Geely Automobile Research & Development Co. Ltd., Hangzhou Bay New District Ningbo 315336 (CN)
(72) Inventor: TRINH, Freddy, 411 39 GÖTEBORG (SE)
(74) Representative: Zacco Sweden AB

(57) **Abstract**

The invention relates to a transmission (1) for a vehicle. The transmission comprises a first input shaft (2) rotatable about a geometric axis (3), a second input shaft (4) and a clutch (5) by which clutch the first input shaft and the second input shaft are selectively connectable to an engine (6), and an output shaft (9) connectable to a final drive (18). The first input shaft (2) is connectable to the output shaft (9) and the second input shaft (4) is connectable to the output shaft (9), and the transmission further comprises an electric machine (15) connected to the first input shaft (2). A rotor of the electric machine (15) is arranged on the first input shaft (2) for rotating about said geometric axis (3), and the transmission further comprises a dog clutch (10) arranged on the first input shaft (2) for connecting and disconnecting the first input shaft to/from the output shaft (9)

## Description

### TECHNICAL FIELD

The invention relates to a transmission for a vehicle, which transmission comprises a first input shaft, a second input shaft and a clutch by which clutch the first input shaft and the second input shaft are selectively connectable to an engine. The transmission further comprises an output shaft connectable to a final drive, and an electric machine connected to the first input shaft.

### BACKGROUND

For a hybrid vehicle where an engine and one or more electric motors are connected to a gearbox for transmitting torque from the gearbox to wheels of the vehicle, a transmission with a gearbox and an electric motor can be designed in many ways for achieving the requisite gears and functions.

There are however boundary conditions with respect to costs, weight and available space at the same time as it should be possible to use both the engine and the electric motor in an efficient way.

### SUMMARY

An objective of the invention is to provide a transmission comprising one or more electric machines which transmission enables a more effective way of using power sources in a transmission for a vehicle.

The objective is achieved by a transmission for a vehicle, wherein the transmission comprises a first input shaft rotatable about a geometric axis, a second input shaft and a clutch by which clutch the first input shaft and the second input shaft are selectively connectable to an engine, and an output shaft connectable to a final drive, wherein the first input shaft is connectable to the output shaft and the second input shaft is connectable to the output shaft, and the transmission further comprises an electric machine connected to the first input shaft, and a rotor of the electric machine is arranged on the first input shaft for rotating about said geometric axis, and wherein the transmission further comprises a dog clutch arranged on the first input shaft for connecting and disconnecting the first input shaft to/from the output shaft.

The invention is based on the insight that by such a transmission the electric machine can be used in a flexible manner at the same time as the losses on the transmission can be reduced. The power provided by the electric motor can be used in a way allowing the complexity of the mechanical components of the transmission to be reduced.

By the use of the dog clutch not involving clutch slip as a friction clutch, losses and wear can be reduced. The losses can be further reduced since a dog clutch will require less clutch actuation energy.

The term "dog clutch" is meant to cover coupling elements that couple two rotating components not by friction but interference.

The electric machine can be an electric motor or a combined electric motor and generator. Preferably the electric machine is connected to an energy storage for transferring energy between the electric machine and the energy storage.

The clutch is suitably a so-called dual clutch used for achieving a dual clutch transmission (DCT). For example, the first input shaft and the second input shaft which are selectively connectable to an engine via the clutch can be arranged such that the first input shaft is an outer input shaft and the second input shaft is an inner input shaft, where the outer input shaft and the inner input shaft are arranged concentrically relative to each other.

The expression "a rotor of the electric machine is arranged on the first input shaft" means that the rotor is part of the input shaft or the rotor is connected to the input shaft for transmitting torque from the rotor to the first input shaft. When the rotor is connected to the input shaft, the rotor may extend around the input shaft. The rotor is preferably directly connected to the input shaft such that no coupling element has to be closed for achieving connection between the rotor and the first input shaft, though the rotor could be connected to the first input shaft through another component, such as a gear, for example a planetary gear.

According to a further embodiment, the first input shaft and the second input shaft are connectable to each other by the clutch, and preferably the clutch is a dual clutch. Hereby, an increased flexibility can be obtained since selective connection between the shafts, the electric machine(s) and the engine can be enabled.

According to a further embodiment, the dog clutch is arranged between the electric machine and the output shaft. Hereby, it is possible to use different propulsion strategies, such as serial hybrid, parallel hybrid, etc., where the electric machine can be disconnected from the output shaft and rotate at an energy optimized speed.

The electric machine is preferably arranged between the clutch and the dog clutch. Hereby, the number of control and drive strategies can be further increased.

For example, the first input shaft can be connected to the output shaft through a gear wheel arranged on the first input shaft and a gear wheel arranged on the output shaft, where the gear wheel of the first input shaft and the gear wheel of the output shaft are engaged with each other. Hereby, a basic gear ratio is achieved for the transmission used when transmitting torque from the engine and/or from the electric machine, through the first input shaft and to the output shaft.

Then, the dog clutch is preferably arranged between the electric machine and the gear wheel of the first input shaft.

For example, the second input shaft can be connected to the output shaft through a gear wheel arranged on the second input shaft and a gear wheel arranged on the output shaft, where the gear wheel of the second input shaft and the gear wheel of the output shaft are engaged with each other. Hereby, a basic gear ratio is achieved for the transmission used when transmitting torque from the engine through the second input shaft and to the output shaft.

According to a further embodiment, the transmission comprises a further electric machine connected to the second input shaft. Hereby, an increased flexibility allowing an improved energy optimisation can be achieved and electric propulsion is possible for an increased number of driving modes. For example, it is possible to use electric reverse driving, serial hybrid driving where the engine drives one electric motor which charges a battery and powers the other electric motor, and parallel hybrid driving if increased torque is required.

In the same way as described for the electric machine above, the further electric machine can be an electric motor or a combined electric motor and generator.

According to a further embodiment, the further electric machine is connected to the second input shaft through a gear wheel arranged on a motor shaft of the further electric machine and a gearwheel arranged on the second input shaft, wherein the gearwheel of the motor shaft and the gear wheel of the second input shaft are engaged with each other. Hereby, a basic gear ratio is achieved for the transmission used when transmitting torque from the further electric machine through the second input shaft and to the output shaft.

According to a further embodiment, the second input shaft is permanently connected to the output shaft. Hereby, the number of components can be reduced.

According to a further embodiment, the transmission comprises a further dog clutch arranged on the second input shaft for connecting and disconnecting the second input shaft to/from the output shaft. Hereby, an increased flexibility is obtained, and the system is redundant in the way that operation by one electric motor is allowed if there is an error associated with the other electric motor and vice versa. In addition, by the use of the further dog clutch not involving clutch slip as a friction clutch, losses and wear can be reduced. The losses can be further reduced since a dog clutch will require less clutch actuation energy.

According to a further embodiment, the electric machine and the further electric machine are electrically connected to each other via the energy storage. By electrically connected to each other is meant that energy can be transferred between the electric machines which will increase the flexibility of the transmission. It should however be stressed that each electric machine is suitably independently controlled. Hereby, energy can be transferred between the electric machines via the energy storage and one or both electric machines can be used both as motor and generator. In case AC electric machines are used, each machine is suitably connected to the energy storage device by means of an inverter for converting AC to DC, when charging the energy storage by the generator function of the machine, and from DC to AC, when powering the electric machine by the energy storage.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1 is a schematic view of one example embodiment of a transmission according to the invention,
Fig. 1b is a further example embodiment of the transmission in Fig. 1, and
Fig. 2 is a variant of the transmission in Fig. 1.

### DETAILED DESCRIPTION OF EXAMPLE EMBODIMENTS

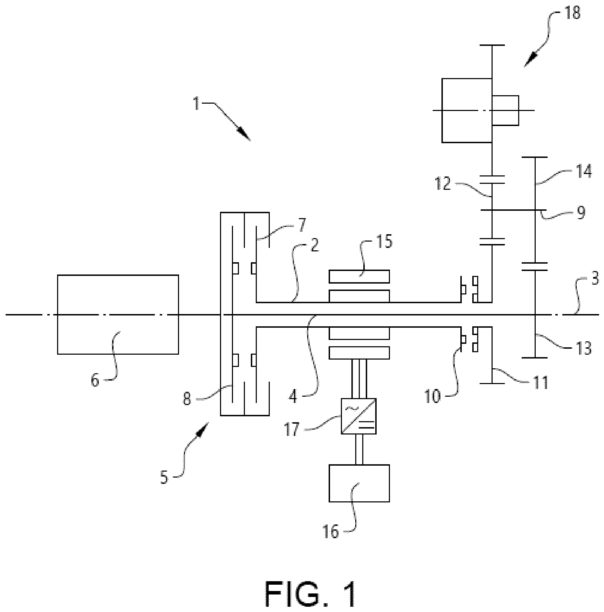

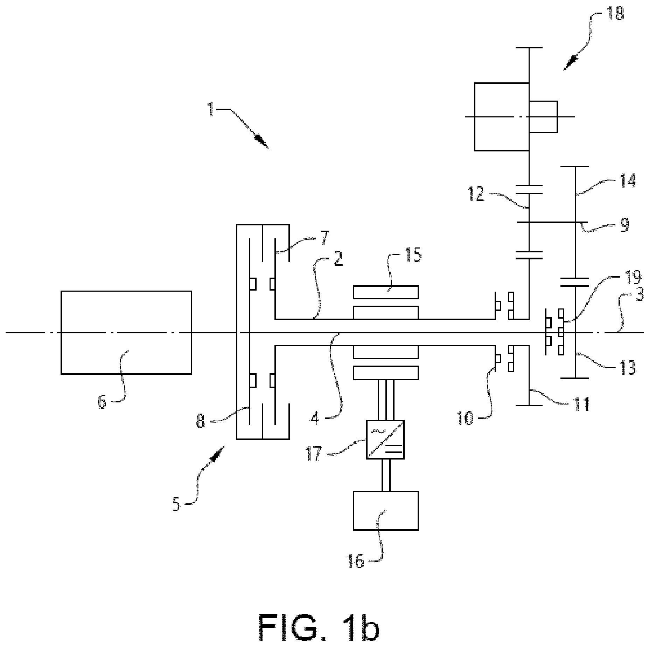

Fig. 1 is a schematic view showing a transmission 1 for a vehicle. The transmission 1 comprises a first input shaft 2 rotatable about a geometric axis 3, a second input shaft 4 and a clutch 5 by which clutch the first input shaft 2 and the second input shaft 4 are selectively connectable to an engine 6. This means that the first input shaft 2 and the second input shaft 4 can be connected to the engine 6 one at the time.

The engine 6 can be an internal combustion engine. The clutch 5 can be a dual clutch having a first clutch portion 7 for connecting the first input shaft 2 to the engine 6 and a second clutch portion 8 for connecting the second input shaft 4 to the engine 6. The first input shaft 2 can be an outer input shaft and the second input shaft 4 can be an inner input shaft, where the outer input shaft 2 and the inner input shaft 4 are arranged concentrically relative to each other.

The transmission 1 comprises an output shaft 9 connectable to a final drive 18. The first input shaft 2 is connectable to the output shaft 9. The transmission 1 comprises a dog clutch 10 arranged on the first input shaft 2 for connecting and disconnecting the first input shaft 2 to/from the output shaft 9.

In the example embodiment illustrated in Fig. 1, downstream the dog clutch 10, the first input shaft 2 is connected to the output shaft 9 through a gear wheel 11 arranged on the first input shaft 2 and a gear wheel 12 arranged on the output shaft 9. The gear wheel 11 of the first input shaft 2 and the gear wheel 12 of the output shaft 9 are engaged with each other for transferring torque to the output shaft 9 and further to the final drive 18. Thus, when the dog clutch 10 is closed, the first input shaft 2 is connected to the output shaft 9, whereas when the dog clutch 10 is open, the first input shaft 2 upstream the dog clutch 10 is disconnected from the output shaft 9.

The second input shaft 4 is also connectable to the output shaft 9. In the example embodiment illustrated in Fig. 1, the second input shaft 4 is permanently connected to the output shaft 9. The second input shaft 4 is suitably connected to the output shaft 9 through a gear wheel 13 arranged on the second input shaft 4 and a gear wheel 14 arranged on the output shaft 9. The gear wheel 13 of the second input shaft 4 and the gear wheel 14 of the output shaft 9 are engaged with each other for transferring torque to the output shaft 9 and further to the final drive 18.

Optionally, the transmission 1 could comprise a further dog clutch arranged on the second input shaft 4 for connecting and disconnecting the second input shaft 4 to/from the output shaft 9. See Fig. 1b showing the further dog clutch 19.

The transmission 1 further comprises an electric machine 15 connected to the first input shaft 2. In other words; the electric machine 15 is mechanically connected to the first input shaft 2 for transferring torque between the electric machine 15 and the first input shaft 2. A rotor of the electric machine 15 is arranged on the first input shaft 2 for rotating about said geometric axis 3. The rotor can rotate with the same speed as the first input shaft 2 or can be connected via a gear for obtaining a gear ratio between the rotor and the first input shaft 2.

The dog clutch 10 is suitably arranged between the electric machine 15 and the output shaft 9, preferably between the electric machine 10 and the gear wheel 11 of the first input shaft 2, allowing the electric machine 10 to be connected and disconnected to/from the output shaft 9 by the dog clutch 10. The electric machine 10 is preferably arranged between the clutch 5 and the dog clutch 10, allowing the electric machine 10 to be connected and disconnected to/from the engine 6 by the clutch portion 7 of the clutch 5, and connected and disconnected to/from the output shaft 9 by the dog clutch 10.

The electric machine 15 is suitably a combined electric motor and generator, though in another embodiment the electric machine could be an electric motor only. The electric machine 15 can be electrically connected to an energy storage 16.

The electric machine 15 can be an AC motor/generator and then the electric machine is connected to an AC/DC inverter 17 which in turn is connected to the energy storage 16, such as a battery. The inverter 17 can be used for converting AC to DC when charging the battery 16 by the generator function of the electric machine 15, and for converting DC to AC when powering the electric machine 15 by the battery 16.

Furthermore, the first input shaft 2 and the second input shaft 4 can be connectable to each other by the clutch 5. The first clutch portion 7 and the second clutch portion 8 can be disconnected from the engine 6 and at the same time be connected to each other for transferring torque between the first input shaft 2 and the second input shaft 4 through the clutch 5.

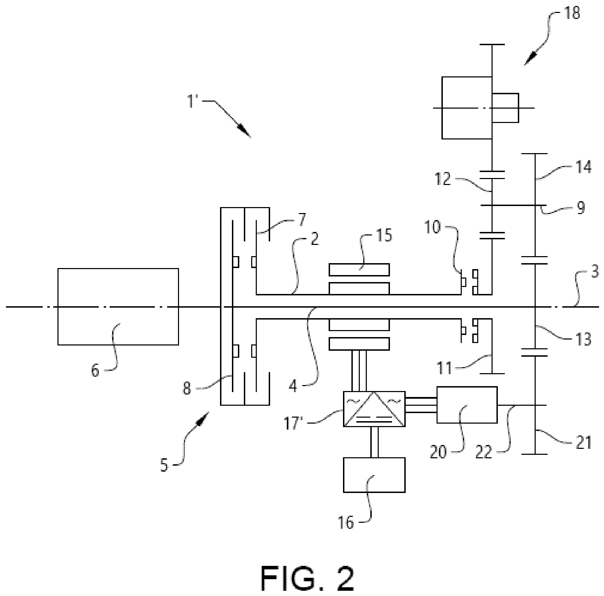

Fig. 2 shows a variant of the transmission. With reference to Fig. 2, only additional or modified components as compared to the transmission in Fig. 1 will be described. In this example embodiment, the transmission 1' has a further electric machine 20 connected to the second input shaft 4. In other words; the further electric machine 20 is mechanically connected to the second input shaft 4 for transferring torque between the further electric machine 20 and the second input shaft 4. The further electric machine 20 is suitably a combined electric motor and generator, though in another embodiment the further electric machine 20 could be an electric motor only.

In the example embodiment illustrated in Fig. 2, the further electric machine 20 is connected to the second input shaft 4 through a gear wheel 21 arranged on a motor shaft 22 of the further electric machine 20 and the gear wheel 13 arranged on the second input shaft 4. The gear wheel 21 of the motor shaft 22 and the gear wheel 13 of the second input shaft 4 are engaged with each other for transferring torque between the further electric motor 20 and the second input shaft 4, and to the output shaft 9.

By the further dog clutch 19 (not shown in Fig. 2) arranged on the second input shaft 4, as indicated in Fig. 1b and briefly mentioned hereinabove with reference to the transmission in Fig. 1, the second input shaft 4 and the further electric machine 20 can be disconnected from each other by the further dog clutch 19, while allowing torque to be transferred from the further electric machine 20 to the output shaft 9 via the gear wheels 21, 13.

The electric machine 15 and the further electric machine 20 can be electrically connected to each other for transferring energy between the machines. In the example embodiment illustrated in Fig. 2, both the electric machine 15 and the further electric machine 20 are suitably electrically connected to an energy storage device 16. The electric machines 15, 20 can be AC motors/generators and then the electric machines are connected to an AC/DC inverter 17' which in turn is connected to the energy storage device 16, such as a battery. The inverter 17' can be used for converting AC to DC when charging the battery 16 by the generator function of the electric machine and/or the further electric machine, and for converting DC to AC when powering the electric machine 15 and/or the further electric machine 20 by the battery 16. Optionally, the inverter 17' can be replaced by two separated inverters, one inverter for each electric machine.

It is to be understood that the present invention is not limited to the embodiments described above and illustrated in the drawings; rather, the skilled person will recognize that many changes and modifications may be made within the scope of the appended claims.

## Claims

1. A transmission (1) for a vehicle, the transmission comprising a first input shaft (2) rotatable about a geometric axis (3), a second input shaft (4) and a clutch (5) by which clutch the first input shaft and the second input shaft are selectively connectable to an engine (6), and an output shaft (9) connectable to a final drive (18), the first input shaft (2) being connectable to the output shaft (9) and the second input shaft (4) being connectable to the output shaft (9), the transmission further comprising an electric machine (15) connected to the first input shaft (2), **characterized in that** a rotor of the electric machine (15) is arranged on the first input shaft (2) for rotating about said geometric axis (3), and the transmission further comprises a dog clutch (10) arranged on the first input shaft (2) for connecting and disconnecting the first input shaft to/from the output shaft (9).

2. A transmission according to claim 1, **characterized in that** the electric machine (15) is arranged between the clutch (5) and the dog clutch (10).

3. A transmission according to claim 1 or 2, **characterized in that** the first input shaft (2) and the second input shaft (4) are connectable to each other by the clutch (5).

4. A transmission according to any of claims 1-3, **characterized in that** the dog clutch (10) is arranged between the electric machine (15) and the output shaft (9).

5. A transmission according to any preceding claim, **characterized in that** the first input shaft (2) is connected to the output shaft (9) through a gear wheel (11) arranged on the first input shaft (2) and a gear wheel (12) arranged on the output shaft (9), the gear wheel (11) of the first input shaft (2) and the gear wheel (12) of the output shaft (9) being engaged with each other.

6. A transmission according to any preceding claim, **characterized in that** the second input shaft (4) is connected to the output shaft (9) through a gear wheel (13) arranged on the second input shaft (4) and a gearwheel (14) arranged on the output shaft (9), the gear wheel (13) of the second input shaft (4) and the gear wheel (14) of the output shaft (9) being engaged with each other.

7. A transmission according to claim 5, **characterized in that** the dog clutch (10) is arranged between the electric machine (15) and the gear wheel (11) of the first input shaft (2).

8. A transmission according to any preceding claim, **characterized in that** the first input shaft (2) is an outer input shaft and the second input shaft (4) is an inner input shaft, the outer input shaft (2) and the inner input shaft (4) being arranged concentrically relative to each other.

9. A transmission according to any preceding claim, **characterized in that** the clutch (5) is a dual clutch for achieving a dual clutch transmission.

10. A transmission according to any preceding claim, **characterized in that** the electric machine (15) is connected to an energy storage (16).

11. A transmission according to any preceding claim, **characterized in that** the transmission comprises a further electric machine (20) connected to the second input shaft (4).

12. A transmission according to claim 11, **characterized in that** the further electric machine (20) is connected to the second input shaft (4) through a gear wheel (21) arranged on a motor shaft (22) of the further electric machine (20) and a gear wheel (13) arranged on the second input shaft (4), the gear wheel (21) of the motor shaft (22) and the gear wheel (13) of the second input shaft (4) being engaged with each other.

13. A transmission according to claim 10 and 11, **characterized in that** the electric machine (15) and the further electric machine (20) are electrically connected to each other via the energy storage (16).

14. A transmission according to any preceding claim, **characterized in that** the second input shaft (4) is permanently connected to the output shaft (9).

15. A transmission according to any of claims 1-13, **characterized in that** the transmission comprises a further dog (19) clutch arranged on the second input shaft (4) for connecting and disconnecting the second input shaft (4) to/from the output shaft (9).
